# EUROPEAN PATENT SPECIFICATION

(11) **EP 0 975 989 B1**
(45) Date of publication and mention of the grant of the patent: **28.06.2006**
(21) Application number: 97927587.2
(22) Date of filing: 14.02.1997
(51) Int. Cl.: G01S 5/14

(54) **A NAVIGATION/GUIDANCE SYSTEM FOR A LAND-BASED VEHICLE**
NAVIGATIONS- UND FÜHRUNGSSYSTEM FÜR LANDFAHRZEUGE
SYSTEME DE RADIONAVIGATION/GUIDAGE POUR UN VEHICULE A TERRE

(43) Date of publication of application: 02.02.2000
(73) Proprietor: Korver, Kelvin, Adams, NE 68301 (US); Hawkinson, Wesley, Chanhassen, MN 55317 (US); Boedigheimer, Donovan, Coon Rapids, MN 55433 (US)
(72) Inventor: Korver, Kelvin, Adams, NE 68301 (US); Hawkinson, Wesley, Chanhassen, MN 55317 (US); Boedigheimer, Donovan, Coon Rapids, MN 55433 (US)
(74) Representative: Thomson, Paul Anthony
(86) International application number: PCT/US1997/002445
(87) International publication number: WO 1998/036288

(56) References cited:
- EP-A- 0 716 315
- EP-A- 0 736 441
- WO-A-91/09375
- WO-A-95/18432
- DE-A- 19 504 475
- DE-C- 19 604 812
- US-A- 5 075 693
- US-A- 5 517 419
- P. DAUM ET AL: "AIDED INERTIAL LAND NAVIGATION SYSTEM (ILANA) WITH A MINIMUM SET OF INERTIAL SENSORS" POSITION LOCATION AND NAVIGATION SYMPOSIUM (PLANS), LAS VEGAS, APR. 11 - 15, 1994, no. -, 11 April 1994, INSTITUTE OF ELECTRICAL AND ELECTRONICS ENGINEERS, pages 284-291, XP000489353
- PATENT ABSTRACTS OF JAPAN vol. 016, no. 460 (P-1427), 24 September 1992 & JP 04 164277 A (HONDA MOTOR CO LTD), 9 June 1992,

## Description

### BACKGROUND OF THE INVENTION

### FIELD OF THE INVENTION

The present invention relates to inertial navigation systems. More particularly, though not exclusively, the present invention relates to an inertial navigation/guidance system using a radio navigation receiver to correct the navigation errors.

### PROBLEMS IN THE ART

Differential global positioning system (DGPS) based guidance systems for airborne application of agrochemicals has met with huge success and it follows that this technology could be used with ground rig applicators if certain technical problems can be overcome. The primary differences between air and ground application processes are associated with the operators view of the land and the operational dynamic environment.

During airborne applications, the pilot generally has a large part of the area involved to be sprayed in view and the GPS antenna (mounted on top of the canopy) follows a relatively straight line when in an application swath. This provides for the required cross track position stability to obtain a well controlled application process.

With ground rig applicators, such as tractors or floaters, the operator may have a limited view of the involved spray area and depending on the size/shape of the field and of the local ground cover it can be very difficult to determine where the previous swath coverage ends in order to proceed with the ensuing swath. A GPS antenna mounted on top of the ground vehicle (where it would be exposed to the GPS satellites) will experience large attitude excursions as the rig swaths the field. This results in GPS derived cross track position excursions relative to the vehicle ground track which would contaminate any attempt to parallel a defined field line. It can therefore be seen that there is a need for a better navigation/guidance system for use with a ground-based vehicle.

There is a need for a solution to various problems relating to ground rig applicators such as tractors and floaters. These ground rig applicators have several disadvantages. Since the application of agrochemicals is a seasonal process (3-4 months per year), the workers hired to operate the floaters are seasonal workers. As a result, the seasonal workers are often inexperienced or unreliable in the operation of the floaters. This increases the probability that the operator will skip areas of the field or apply double coverage to overlapping areas. These problems cost the seller of the chemicals and the farmer thousands of dollars. A typical floater will cost $100,000 and will apply $500,000 - $1 million dollars worth of chemicals per year. It can therefore be seen that efficient operating of a floater is very important. Typical prior art floaters are guided through a field by following a trail of foam markers which are marked on the field on the previous swath. As a result, there is a lot of room for human error and the floaters cannot be operated at night. A need can therefore be seen which would allow the floaters to operate accurately day or night throughout the season. Such a solution would allow a chemical applier to operate half as many machines. An accurate, real-time inexpensive navigation/guidance system would remedy these problems.

Various prior art navigation systems for ground-based vehicles have several disadvantages. Systems using Doppler radar will encounter errors with the radar. Similarly, gyros will encounter drift errors which will continue to increase unless the drift error is corrected. Gyros that are inexpensive enough to be feasible to use may have drift rates high enough to make them unusable. For example, a typical inexpensive gyro sensor may have a drift rate uncertainty as high as 3600° per hour which makes the gyro unusable for most applications. As a result, gyros have good short term characteristics but bad long term characteristics as the drift error becomes larger as time goes on.

When navigating using dead reckoning you need a very high fidelity heading measurement which has not been achieved adequately using low costs sensors.

Various prior art systems navigating by GPS also have disadvantages. Prior art systems using GPS use GPS as the primary navigator. This intensifies the problems found with GPS. A GPS position calculation has a lag time. As a result, the position solution provided by a GPS receiver tells a user where the vehicle was a moment ago not in real time. Another problem with GPS systems are the errors resulting from the antenna lever arm problem. A GPS antenna typically is a certain distance away from the GPS receiver. Since the GPS antenna is the collection point of the GPS signals received, the position solution will not accurately describe the position of the GPS receiver or some other reference point. If the geometrical distance between the GPS receiver or reference point and the GPS antenna is known, the position of the reference point may be calculated. However, as a ground based vehicle travels over uneven terrain such as terraces, slopes, ruts, bumps, etc., the actual position of the GPS antenna cannot be determined resulting in erratic GPS position solutions.

Most prior art attempts to use a GPS navigation system attempted to deal with problems by correcting GPS drift and lag time. However no prior art system navigating by GPS has achieved the high accuracy and real time solutions required for applications requiring a high level of accuracy. The prior art attempts have not provided an adequate solution because GPS does not provide a continuous navigation solution. A GPS system will update its position periodically, not in real time, and a lag time is still involved. Another problem with a GPS system is the possibility of a signal dropout of the satellite signals. The accuracy of a GPS system is also limited due to the errors caused by the ionosphere. Another problem with GPS systems is that altitude data provided by a GPS receiver is not precise.

Another problem with GPS systems is that a GPS system cannot accurately supply guidance data for a curved path. This problem relates to the lag time involved with GPS. A GPS system can only do linear interpolation of GPS position solutions which is inadequate for navigating a curved path. A GPS system also will not provide high quality heading information. Finally, the altitude calculated by a GPS receiver is inaccurate and unusable for certain applications.

Publication WO 91/09375 discloses an integrated vehicle positioning and navigation system, apparatus and method. It describes improving accuracy of position estimation by combining GPS, inertial and odometer data, and by predetermined weighting of such data, outputting a position estimate. It discloses the use of expensive components and a complex system that tries to reduce the problems with the various components and their accuracy.

Publication WO 95/18432 is entitled "Field Navigation System". It describes what it calls a dead reckoning navigation system, using data from a compass, GPS, and a radar gun as inputs to a position computer. Improved accuracy of estimated position is taught by pre-loading a map into the system so that a cross check of the estimated calculated position can be made to the pre-loaded map. This adds complexity and the burden of having a pre-loaded map for the area the vehicle is in.

### FEATURES OF THE INVENTION

A general feature of the present invention is the provision of an inertial navigation/guidance system.

A further feature of the present invention is the provision of an inertial navigation/guidance system for use on a land-based vehicle.

A further feature of the present invention is the provision of an inertial navigation/guidance system that senses the attitude of the vehicle.

A further feature of the present invention is the provision of an inertial navigation/guidance system which uses a radio navigation receiver to correct the drift errors of the inertial system.

A further feature of the present invention is the provision of an inertial navigation/guidance system which uses inexpensive sensors to achieve a highly accurate result.

A further feature of the present invention is the provision of an inertial attitude determination system which is stand alone.

A further feature of the present invention is the provision of an inertial navigation/guidance system which uses gyro information to compute the attitude and heading of the vehicle and a position change sensor to sense the speed of the vehicle.

A further feature of the present invention is the provision of an inertial navigation/guidance system which uses accelerometers to measure the pitch and roll of the vehicle to refine the sensed attitude of the vehicle.

A further feature of the present invention is the provision of an inertial navigation/guidance system which includes software to control the functions of the system.

A further feature of the present invention is the provision of an inertial navigation/guidance system which uses the sensed attitude of the vehicle to determine the position of the radio navigation antenna in order to correct the lever-arm error.

A further feature of the present invention is the provision of a system for use on a boat or ship.

A further feature of the present invention is the provision of a system which is part of a surveying system.

These as well as other features of the present invention will become apparent from the following specification and claims.

### SUMMARY OF THE INVENTION

According to the present invention there is provided a method of compensating for radio navigation system antenna lever arm in radio navigation system position calculations for a non-airborne vehicle including providing a radio navigation system antenna having a physical location relative to a physical reference point on the vehicle; and providing an inertial system for sensing the angular changes of the vehicle; characterized by the steps of:
(a) estimating the attitude of the vehicle using data from the inertial system; and
(b) estimating the position of the radio navigation system antenna based on the attitude of the vehicle and the physical location of the radio navigation system antenna relative to the physical reference point;
(c) compensating for antenna lever arm in radio navigation system position calculations based on the determinations of steps (a) and (b).

Also according to the present invention there is provided an apparatus for compensating for radio navigation system antenna lever arm in radio navigation system position calculations for a non-airborne vehicle including a radio navigation system antenna having a physical location relative to a physical reference point on the vehicle; characterized by:
(a) an inertial system component adapted to produce data from which can be estimated the attitude of the vehicle;
(b) a processor component adapted to produce data which can estimate the physical position of the radio navigation system antenna based on the data regarding the attitude of the vehicle and the known physical location of the radio navigation system antenna relative to the physical reference point;
(c) means for compensating for antenna lever arm in radio navigation system position calculations based on the data of subparagraphs (a) and (b).

### BRIEF DESCRIPTION OF THE DRAWINGS

Figure 1 shows a block diagram of the primary hardware elements of the navigation/guidance system of the present invention.
Figure 2 shows a functional block diagram of the attitude/heading portion of the present invention.
Figure 3 shows a functional block diagram of the position correction function of the present invention.
Figure 4 shows a functional block diagram of the dead reckoning navigation function of the present invention.
Figure 5 shows a functional block diagram of the guidance function of the present invention.
Figure 6 shows a tractor using the system of the present invention.
Figure 7 is an aerial view of a field being worked by the tractor shown in Figure 6.

### DETAILED DESCRIPTION OF THE PREFERRED EMBODIMENT

The present invention will be described as it applies to its preferred embodiment. It is not intended that the present invention be limited to the described embodiment. It is intended that the invention cover all alternatives, modifications, and equivalences which may be included within the spirit and scope of the invention. While the present invention is described as being used on a land based vehicle, it is intended that the invention cover other applications. Also, the term land-based vehicle is meant to include vehicles on the ground or in the water, "land-based" is meant only to distinguish from airborne applications.

The navigation/guidance system of the present invention is a dead reckoning navigator which uses periodic GPS fixes to correct the drift of the inertial system. The system uses GPS antenna attitude compensation to improve the accuracy of the GPS fixes. The system primarily uses speed sensed by Doppler radar and attitude and heading sensed by a set of gyros. As discussed above, systems using a Doppler sensor and gyros have the problem of errors in the sensors. In addition, in order to use inexpensive sensors, very large errors are encountered. The system uses various processes to compensate for the errors. The heading sensed by the gyros is aided by a magnetic heading compass and a GPS receiver. The speed sensed by the Doppler radar is also aided by the GPS receiver. The system also uses accelerometers to improve the accuracy of the system. A set of horizontal accelerometers measure the roll and pitch of the vehicle. This is used to provide the attitude integration algorithm (discussed below) with the vehicle horizontal rotations to more accurately calculate the attitude and heading.

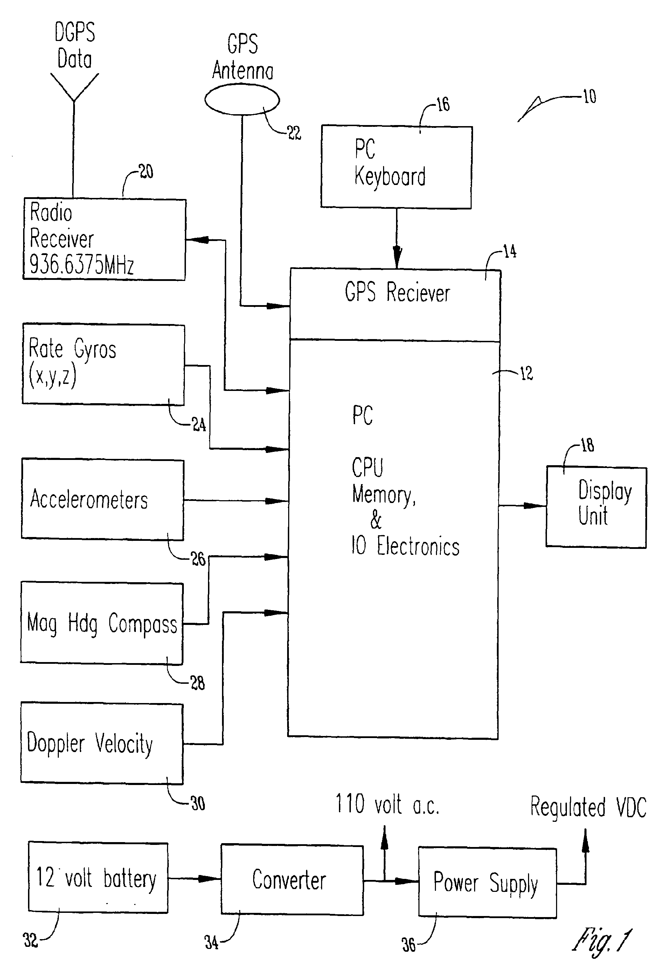

Figure 1 shows the primary hardware elements of the inertial navigation/guidance system 10 of the present invention. The system 10 is comprised of a personal computer (PC) 12 which includes a CPU, memory and input/output electronics. Although the embodiment shown in the drawings shows a personal computer, the invention could use a processor circuit that includes a CPU, memory, and input/output electronics on a single processor card. A GPS receiver 14 plugs directly into an open PC expansion slot. Any GPS receiver suitable for use with the present invention may be used, however the preferred GPS receiver is the NovAtel GPS receiver card #951R. Alternatively, the system 10 could simply have a connector that would receive GPS data from any existing GPS receiver. Any other type of radio navigation system or combination of systems could be substituted for the GPS system such as LORAN, GLONASS, etc. A keyboard or keypad 16 is connected to the PC 12 and is used as a user interface to input data or control the system 10. A display unit 18 is also connected to the PC 12. The display unit 18 is used to display various information to a user. The display unit 18 could take on many forms, but is preferably comprised of a CRT display. The display unit could even be comprised of a display screen that shows the operator a graphic of a field or portion of the field and could indicate where the vehicle has been and where it is going. All sensor input data to the PC 12 will be digital serial. If any of the selected sensors provide only analog outputs, A/D converters will be used where required to obtain the appropriate input data formats. Also shown in Figure 1 is a block diagram of the power supply circuit used by the present invention. The power supply circuit includes a 12 volt battery 32, a voltage converter 34 and a power supply 36. The power supply circuit provides the system 10 with 110 volts AC and a regulated DC voltage.

A portable DGPS receiver 20 is also connected to the PC 12. The DGPS radio receiver 20 receives DGPS data for use by the PC to overcome the effects of Selective Availability (SA) as well as other imperfections in the time-coded signals broadcast by the NAVSTAR satellites. The use of DGPS provides a more accurate location solution than GPS alone. The DGPS radio receiver 20 may be any type of DGPS receiver suitable for use with the present invention but is preferably the Smartbase model number 10, manufactured by Premier GPS Inc. Also note that the present invention would work without using DGPS, although the accuracy may be less. One alternative to the preferred embodiment is to use a receiver that uses a combination of GPS and GLONASS signals to produce a more accurate radio navigation system.

A GPS antenna 22 is connected to the GPS receiver 14 to provide the GPS receiver 14 with GPS signals from the NAVSTAR satellites. The GPS antenna 22 acts as the collection point for GPS signals received by the GPS receiver 14. The GPS antenna 22 is mounted to the host vehicle at a known location such that the location of the antenna 22 is always known relative to the GPS receiver 14 or some other reference point.

As shown in Figure 1, a number of sensors are also connected to the PC 12. Three rate gyros 24, three accelerometers 26, and a magnetic heading compass 28 are connected to the PC 12 to provide the system with various data. Preferably, the gyros 24, accelerometers 26 and the magnetic heading compass 28 are assembled together in a single unit. A position change sensor 30, preferably comprised of a Doppler radar is also connected to the PC 12 to provide the system with speed data. Although the preferred embodiment uses three each of the gyros 24 and accelerometers 26, more or less could be used. The choice of using two or three accelerometers depends on such factors as the level of accuracy desired, the application of the system, and the sophistication of the Kalman filter, etc. The gyros 24 act as angular change sensors, so therefore, any device with the same function could be substituted for the gyros 24. The preferred gyros are the model ENV-05H-02 manufactured by Murata Erie Co., Ltd. Similarly, the accelerometers 26 could be substituted by an equivalent device such an inclinometer, tilt sensors, etc. The preferred accelerometer is the model 02753-01 manufactured by Lucas Control System Products. The magnetic heading compass could also be substituted by any other heading sensor, for example, a fluxgate compass. The preferred magnetic heading compass is the model C100 manufactured by KVH Industries, Inc. Also note that the magnetic heading compass 28 is optional. Depending on the sophistication of the Kalman filter and other factors, the magnetic heading compass 28 may not be needed by the system. The Doppler radar 30 functions as a position change sensor, so therefore any equivalent device could be substituted for the Doppler radar such as an odometer or any other device used to derive the vehicle speed. The preferred Doppler radar is the model Radar II manufactured by Dickey-John.

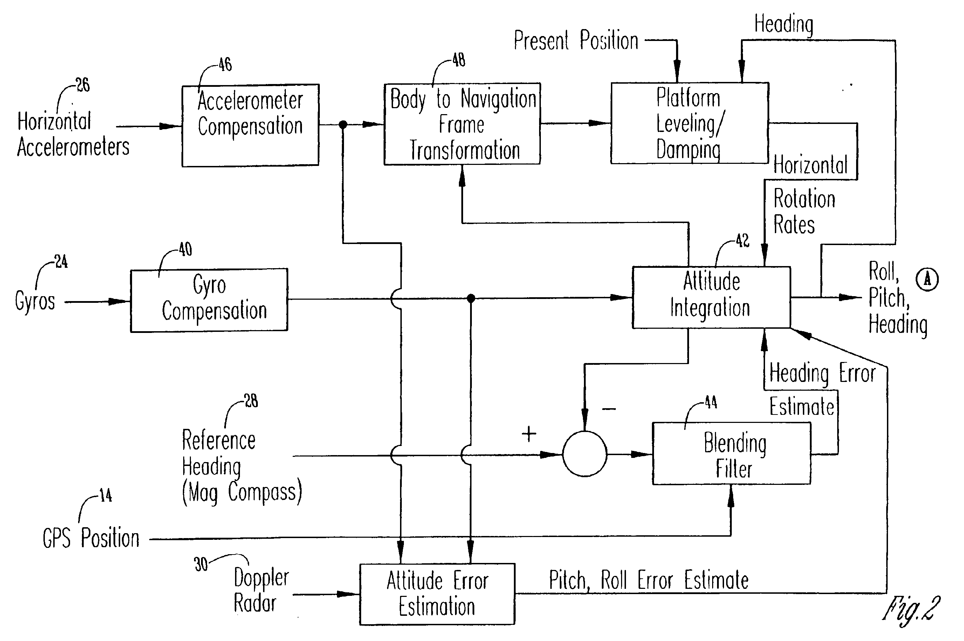

Figure 2 shows a functional block diagram of the attitude/heading portion of the invention. The navigation/guidance system 10 uses software which performs the functions described and outlined in the figures. As described below, the attitude integration algorithm 42 uses the angular rates from the gyros 24, horizontal accelerations from the horizontal accelerometers 26, and heading and attitude error estimates from the other sensors to calculate a value for the vehicle's attitude (pitch and roll) and heading. The attitude and heading are primarily sensed by the gyros 24. The various sensors are used together as shown in the figures to obtain a more accurate value for attitude (pitch and roll) and heading. The data from the gyros 24 is applied the gyro compensator function 40 which applies constant values such as a scale factor, misalignment and fixed bias to the data and also applies changing values such as an estimated dynamic bias to the data. The data is then provided to the attitude integration algorithm 42 to calculate the attitude and heading. The horizontal accelerometers 26 provide data to the accelerometer compensation function 46 which applies constant values such as scale factor, bias, and misalignments to the data. The compensated data from the accelerometers 26 is then provided to a direction cosine matrix (shown in Figure 2 as the body to navigation frame transformation function 48) and a platform leveling/damping function 50. The yaw attitude is slaved to the magnetic heading reference supplied by the magnetic heading compass 28. This, along with data from the GPS position are used by a blending filter 44 to provide a heading error estimate to the attitude integration algorithm 42. A pitch and roll error estimate is also provided to the attitude integration algorithm 42. The pitch and roll error estimate is derived from data from the Doppler radar 30, the horizontal accelerometers 26, and the gyros 24.

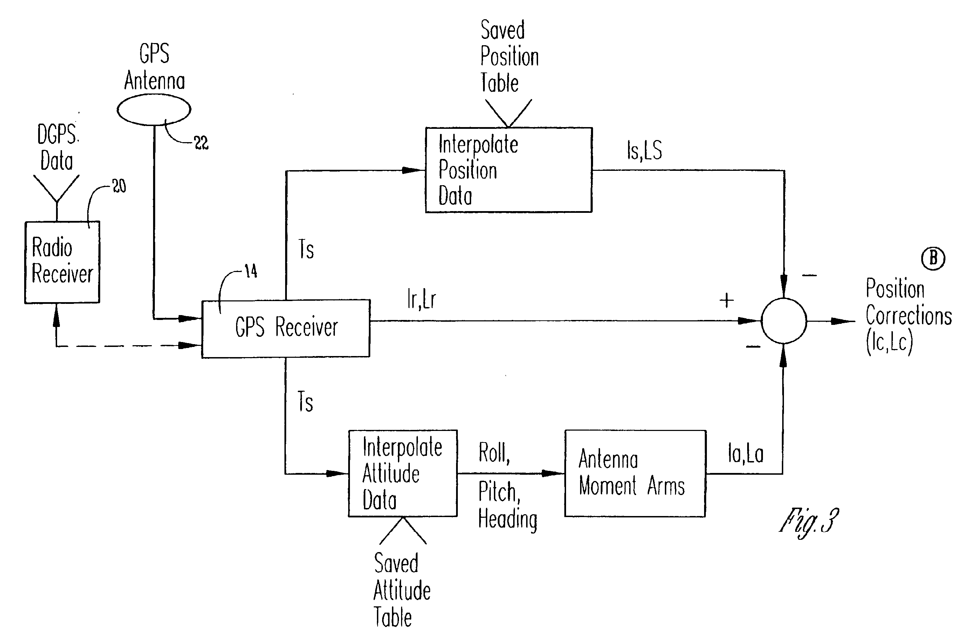

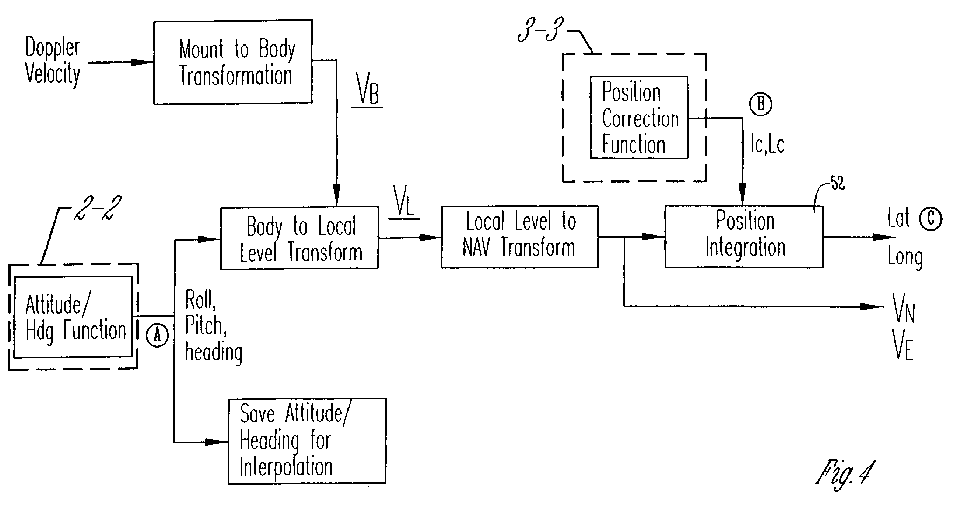

The attitude, heading and corresponding time are saved in a data table for interpolation to the GPS data time. This interpolated data is required to provide position corrections to the GPS position fix (see discussion of Figure 3 below) for use in the dead reckoning navigation function shown in Figure 4 (discussed below).

Figure 3 is a block diagram of the position correction function. As described above, the GPS receiver 14 is connected to the GPS antenna 22 to receive GPS data signals from the NAVSTAR satellites. The GPS receiver 14 also receives DGPS data from the DGPS radio receiver 20 to improve the GPS accuracy. The position corrections lc, Lc are calculated based on the latest position lr, Lr provided by the GPS receiver 14, the saved/interpolated dead reckoned position 1s, Ls, and the GPS antenna moment arm (lever arm) corrections (discussed below) la, La based on the saved/interpolated attitude data corresponding to the GPS data time.

The system uses the attitude data from the navigation system 10 for GPS antenna lever arm corrections. An antenna mounted on top of a vehicle such as a tractor or floater would be about 13 feet from the ground and will experience large attitude excursions as the vehicle swaths a field. As shown in Figure 3, the system takes this into account by using the attitude data to make GPS position corrections based on the current attitude of the vehicle and the known position of the GPS antenna relative to the vehicle. As a result, as the vehicle travels over terraces, ruts, bumps, etc., the relatively large swings of the GPS antenna will not effect the accuracy of the GPS position. Using similar techniques, the position calculated by the system can be transferred to any part of the vehicle, for example to the end of a sprayer boom.

Figure 4 shows a block diagram of the dead reckoning navigation function. The velocity sensed by the Doppler velocity sensor 30 is transformed from mount to body axes, then transformed from body to local level axes using the attitude (pitch and roll) and heading data from the attitude integration algorithm 42 shown in Figure 2. After the body to local level transform, the velocity is then transformed from local level to north referenced navigation axes. Finally, the data is provided to the position integration function 52 which is reset according to the available position correction values lc, Lc coming from the position correction function shown in Figure 3.

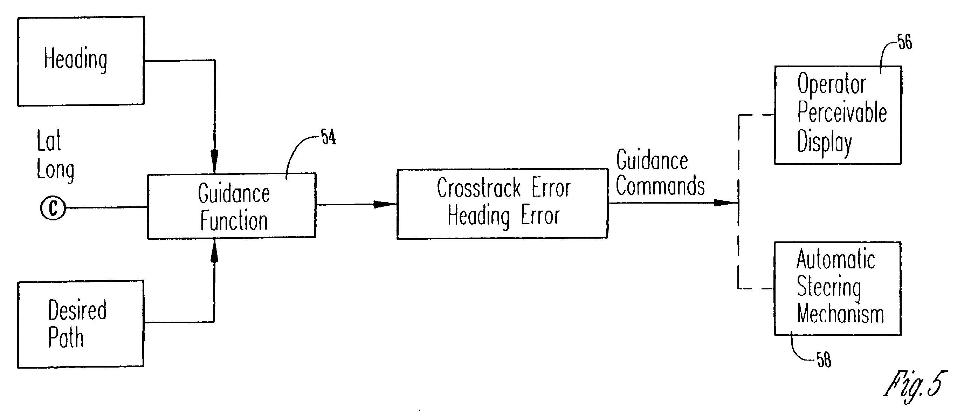

Figure 5 shows a block diagram of the guidance function of the present invention. As shown in Figure 5, the position of the vehicle determined by the position integration (Figure 4) is supplied to a guidance algorithm 54 along with the vehicle's heading and the desired path. The guidance algorithm 54 uses this data to determine the cross track error and the heading error. From the cross track and heading errors, the system creates guidance commands. The guidance commands are provided to an operator perceivable display 56 and/or an automatic steering mechanism 58 (see discussion below). The display 56 may take on any form. The display 56 could be display unit 18 (discussed above), a light bar (discussed below), or any other type of operator perceivable indicator. The automatic steering mechanism 58 could also take on any form. For example, the steering mechanism could be a hydraulic steering mechanism.

The navigation/guidance system of the present invention operates as follows. Before the host vehicle moves, the navigation system will initialize itself. The attitude (pitch and roll) is initialized by the accelerometers 26. The heading is initialized by the magnetic heading compass 28. The heading initialization is the most important initialization step. If the vehicle is moving the magnetic heading compass 28 will not be used to initialize the heading. The system is initialized based on where the operator of the vehicle indicates the vehicle is located and/or by GPS data. In other words, the operator can manually enter in the initial location and/or the system can use the GPS location.

Once the host vehicle begins moving the system 10 uses the various sensors to sense the movement of the vehicle. The attitude (pitch and roll) and heading of the host vehicle is sensed by the gyros 24. The speed of the vehicle is sensed by the Doppler radar 30. After sensing the attitude, heading, and speed, the system 10 calculates the velocity of the vehicle. The velocity of the vehicle is then integrated to determine the position of the vehicle. The system then uses a process to correct for errors in the system (see Figure 3). The speed, heading and dead reckoning position errors are corrected by periodic GPS fixes. The attitude pitch and roll errors are corrected by sensing the acceleration caused by the motion of the vehicle. This is done via the accelerometers 26 and the knowledge of the vehicle speed and rotation rate. The accelerometers 26 sense the specific force accelerations acting on the vehicle including gravity, the acceleration of the vehicle, and centrifugal force. The gravity force is a known value and can be subtracted out. The remaining accelerations are then integrated to get a velocity. Similarly, the velocity and rotation rate of the vehicle are known and can be subtracted out. The remaining values can be used to correct the attitude errors.

A vehicle using the navigation system 10 to help control a guidance system operates as follows and as described with Figure 5 above. The primary information used by the guidance system from the navigation system 10 is the position of the host vehicle. As shown in Figure 5, the guidance system receives a position signal from the navigation system 10 at a rate of 10 Hz. The guidance system also receives a vehicle heading signal from the navigation system 10 at a 10 Hz rate. Of course, the position and heading data could be received at any other suitable rate, but 10 Hz is the preferred rate. The desired path of the vehicle is provided to the guidance system from the processor memory, user input, or any other source. The guidance system computes cross track and heading error. Cross track error is the distance the vehicle is off from the desired path. Heading error is defined as the angular difference between the vehicle velocity and the desired path. The goal of the guidance system is to drive the cross track error to zero by guiding the vehicle along a desired path. The guidance algorithm 54 described above calculates the cross track error and the heading error to create guidance commands. These guidance commands are the steering signal used by the operator or by an automatic steering mechanism to steer the vehicle along the desired path.

A vehicle equipped with the navigation system 10 of the present invention is capable of very accurately keeping track of where the vehicle is and where it has already been. This information can be used for any number of purposes or applications. The navigation system provides accurate, real time data sufficient to allow a guidance system to navigate along a curved path.

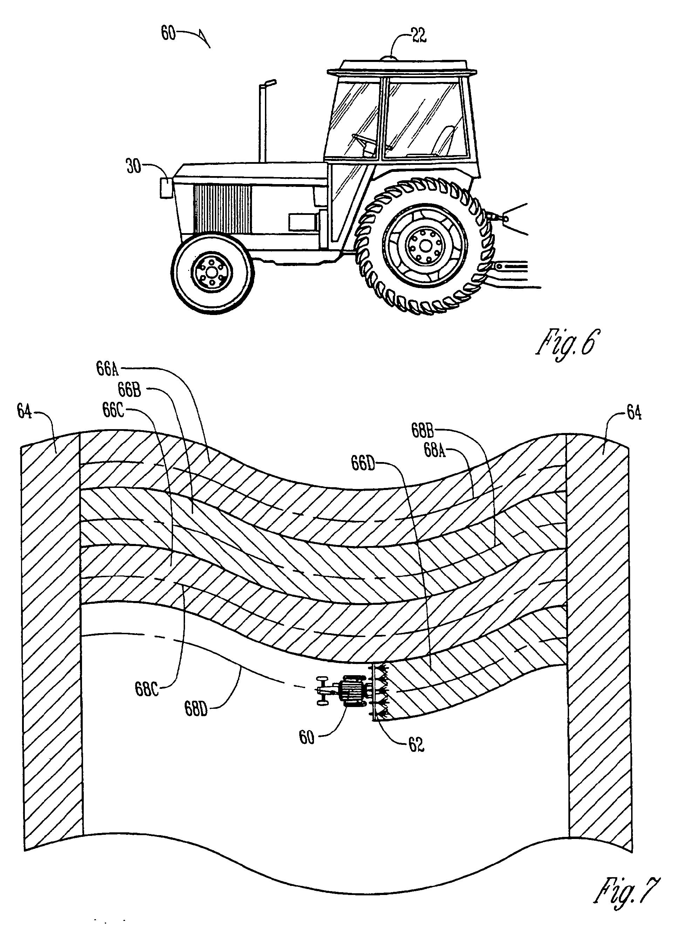

With the navigation system 10 of the present invention used on an agricultural vehicle such as a tractor or floater, the vehicle would have many capabilities. An operator of the vehicle could manually steer through a path in the field and then use the system to guide the vehicle almost exactly parallel to the path on the next swath (see Figure 7, discussed below). This would maximize the efficiency of the vehicle and make the operator's tasks easier and more reliable. Similarly, an operator of the vehicle could manually navigate the vehicle around the edge of a field and command the vehicle to automatically cover the remainder of the field within the outside path. Since the system would have the previous paths in memory, the system would know what portions of the field remain and would be able to cover the remainder of the field. The operator could also manually navigate around waterways and allow the system to automatically navigate around the waterways when they are encountered. The system could also be used to help control the operation of machinery such as sprayers, disks, etc. connected to the vehicles. For example, when a vehicle is turning around at the end of a field and is traveling over areas already sprayed, the sprayers could be automatically turned off until they reach a portion of the field not previously sprayed. Whatever the system is used for, the navigation information obtained could be saved and stored for subsequent operations in the same field. For example, once the system knows the locations of borders, obstacles, etc. in a field, that information can be used later to automatically navigate around a field without "relearning" that information. That would make the system even more efficient after the initial operation in a particular field.

Figure 6 shows a tractor 60 incorporating the present invention. A GPS antenna 22 is mounted to the top of the tractor 60. The Doppler sensor 30 is mounted on the front of the tractor 60. The remaining components of the system 10 are also mounted to the tractor 60.

Figure 7 shows an aerial view of a field being worked by the tractor 60. The tractor is shown pulling a sprayer 62 through the field. As shown in Figure 7, the tractor 60 first sprayed the end rows 64. Next, the tractor was guided along a first swath 66A which followed the shape of the edge of the field. Dashed line 68A shows the path of the tractor 60 during the first swath 66A. The swath 66A is shaded to show that it was sprayed. At the end of the first swath 66A, the guidance system, knowing the location of the end rows 64 and knowing the location of the first swath 66A is able to cause the tractor 60 to turn around and follow the path 68B to start the second swath 66B. Figure 7 shows the tractor 60 as it is making a fourth swath 66D following the path 68D. Also note that the sprayer 62 can be automatically turned off at the end of each swath 66 as the sprayers pass over portions of the field already sprayed. As discussed above, the system 10 is capable of navigating in a curved or uneven path.

An agricultural floater equipped with the present invention would have many capabilities not found in the prior art. First, the reliability of the operators hired to operate the floaters would be less important. The guidance system on the floater would enable the floater to automatically move through the field, for example with an automatic hydraulic steering system. Alternatively, the guidance system could assist the operator in moving through the field via a light bar or other display device. As a result, the entire field would be covered with the proper amount of chemicals giving the farmer higher yields and saving the chemical supplier money from less wasted chemicals. Second, the floaters could operate at night since the operator would not need to watch for the foam markers or other external indictors required by prior art systems. As a result, the chemical applier could use and maintain fewer floaters to spray the same amount of land.

Other applications of the present invention can be seen as well. For example, when the navigation/guidance system is applied to any other vehicle, many of the same advantages are found. In addition, given a typical $90,000 tractor, $60,000 of that cost goes toward the creature comforts such as a cab, air conditioning, etc. With a fully automatic guidance system, the operator and hence the creature comforts are not needed and $60,000 could be cut from the price of the tractor. The navigation/guidance system could also be used to quickly and efficiently survey land. With the system installed on a vehicle, for example a 4-wheeler, a user could simply drive over a given piece of land while the system keeps a record of precisely where the vehicle has been and the elevation at each point. This data could be transmitted or downloaded to a computer to be interpreted and used. Software such as CAD could then be used to create three dimensional maps of the surveyed land. Lawn services could use the navigation/guidance system with lawn sprayers or mowers as described above. Excavating machinery such as bulldozers could use the system to automatically excavate land. The navigation system is also capable of use on boats or ships. Vehicles traveling through water encounter similar problems as do vehicles traveling on the ground. For example, waves and strong winds as well as other forces can dramatically manipulate the attitude of the ship causing problems described above such as the GPS antenna lever arm errors. The navigation system could also be used on boats to survey the bottom of bodies of water. An additional sensor such as sonar could be used to sense the depth of the water at every location that the boat traveled over. This data could be used to determine where silt build-up exists around dams for example. The rail industry could use the navigation/guidance system to keep track of and control trains. The navigation system will continue to operate even while the trains go trough tunnels or under foliage, etc. The railroads could fit more trains on a given track if they knew precisely where each train was. Also, the system is accurate enough to indicate which track a train is on, even where two tracks run parallel in close proximity. Regardless of how the present invention is used, the user will save time, labor, cost, etc.

The preferred embodiment of the navigation system 10 of the present invention may be configured as follows. A sensor package is contained within a single enclosure. The sensor package includes the rate gyros 24, the accelerometers 26 and the magnetic heading compass 28. The sensor package could act as a stand-alone inertial measurement unit with the capability of connecting to a vehicle and any other sensors desired. The Doppler radar position sensor 30 is attached to the vehicle and preferably pointed downward toward the ground at an angle of about 30°. A display head includes the display unit 18, the processor 12, the GPS receiver 14, a tactile device (e.g., a keypad or keyboard), the DGPS radio receiver and the required power supplies. Two antennas (one GPS and one DGPS) are attached to the vehicle and connected to the appropriate receiver. Finally, a light bar is installed on the vehicle in view of the operator and also connected to the display head. The light bar is comprised of a row of lights that indicate the magnitude and direction of the cross track error to the operator. In response to the light bar indication the operator could steer left or right in order to continue on a desired path. Optionally, the system 10 may provide guidance commands to an automatic steering mechanism.

The preferred embodiment of the present invention has been set forth in the drawings and specification, and although specific terms are employed, these are used in a generic or descriptive sense only and are not used for purposes of limitation. Changes in the form and proportion of parts as well as in the substitution of equivalents are contemplated as circumstances may suggest or render expedient without departing from the spirit and scope of the invention as further defined in the following claims.

## Claims

1. A method of compensating for radio navigation system antenna lever arm in radio navigation system position calculations for a non-airborne vehicle (60) including providing a radio navigation system antenna (22) having a physical location relative to a physical reference point on the vehicle (60); and providing an inertial system for sensing the angular changes of the vehicle (60); **characterized by** the steps of:
(a) estimating the attitude of the vehicle (60) using data from the inertial system; and
(b) estimating the position of the radio navigation system antenna (22) based on the attitude of the vehicle (60) and the physical location of the radio navigation system antenna (22) relative to the physical reference point;
(c) compensating for antenna lever arm in radio navigation system position calculations based on the determinations of steps (a) and (b).

2. The method of claim 1 comprising utilizing the determinations to navigate a non-airborne vehicle (60).

3. The method of claim 2 further comprising navigating the non-airborne vehicle (60):
(a) using dead reckoning to estimate current position of the vehicle (60);
(b) periodically correcting the estimated current position using position information from a radio navigation system (14/20) operatively connected to the radio navigation system antenna (22).

4. The method of claim 3 wherein the dead reckoning is accomplished using inertial navigation principles.

5. The method of claim 4 wherein the inertial navigation principles are accomplished using at least one inertial navigation component.

6. The method of claim 5 wherein the inertial navigation component is from the set comprising position change sensor (30), angular change sensor (24), attitude sensor (24/26), yaw sensor (24/26), tilt sensor (24/26), and roll sensor (24/26).

7. The method of claim 6 wherein the inertial navigation component is from the set comprising gyroscope (24), accelerometer (26), speedometer (30), odometer (30), and Doppler sensor (30).

8. The method of claim 6 wherein said position change sensor is comprised of a Doppler radar.

9. The method of claim 3 wherein the radio navigation system (14/20) comprises a GPS based system.

10. The method of claim 3 wherein the radio navigation system is from the set comprising LORAN and GLONASS.

11. A method of navigating a non-airborne vehicle (60) according to claim 3 further comprising the steps of: providing a position change sensor (30); sensing the speed of the vehicle (60) using the position change sensor (30); providing an angular change sensor (24); sensing the heading and attitude of the vehicle (60) using the angular change sensor (24); providing an accelerometer (26); correcting the sensed attitude of the vehicle (60); using data from the accelerometer (26), position change sensor (30) and angular change sensor (24); determining the current position of the vehicle (60) based on a known previous position and the sensed speed, heading, and attitude of the vehicle (60); determining an external position reference using data from the radio navigation system (14/20) and the determined position of the radio navigation system antenna (22); and periodically correcting for error in the determined position of the vehicle (60) using the determined external position reference.

12. The method of navigating according to claim 3 applied to a land-based agricultural vehicle (60) through a field comprising the steps of: sensing the speed of the vehicle (60); providing an inertial sensor system; sensing the heading and attitude of the vehicle (60) using the inertial sensor system (14/20); determining the position of the vehicle (60) based on a known previous position and the sensed speed, heading, and attitude of the vehicle (60); providing a radio navigation system (14/20); determining an external position reference using data from the radio navigation system; refining the determined external position reference based on the determined position of the antenna (22); producing true position data by periodically correcting error in the determined position of the vehicle (60) using the external position reference; and using the true position data to accurately navigate through a field.

13. An apparatus for compensating for radio navigation system antenna lever arm in radio navigation system position calculations for a non-airborne vehicle (60) including a radio navigation system antenna (22) having a physical location relative to a physical reference point on the vehicle (60); **characterized by**:
(a) an inertial system component adapted to produce data from which can be estimated the attitude of the vehicle (60);
(b) a processor component (12) adapted to produce data which can estimate the physical position of the radio navigation system antenna (22) based on the data regarding the attitude of the vehicle (60) and the known physical location of the radio navigation system antenna (22) relative to the physical reference point;
(c) means for compensating for antenna lever arm in radio navigation system position calculations based on the data of subparagraphs (a) and (b).

14. The apparatus of claim 13 wherein the inertial system component and the processor (12) are part of a navigation system for the non-airborne vehicle (60).

15. The apparatus of claim 14 wherein the navigation system for a non-airborne vehicle (60) comprises:
(a) a sensor (30) adapted to provide an output correlated to estimated current position of the vehicle (60) based on dead-reckoning principles;
(b) a receiver (14/20) adapted to receive, calculate, and provide an output, as compensated by the determined position of the antenna (22), correlated to estimated position based on information received from a radio navigation system (14/20);
(c) a component adapted to periodically use the output of the receiver (14/20) to adjust the estimated current position based on dead-reckoning principles.

16. The apparatus of claim 15 wherein the dead reckoning is accomplished using inertial navigation principles.

17. The apparatus of claim 16 wherein the inertial navigation principles are accomplished using at least one inertial navigation component.

18. The apparatus of claim 17 wherein the inertial navigation component is from the set comprising position change sensor (30), angular change sensor (24), attitude sensor (24/26), yaw sensor (24/26), tilt sensor (24/26), and roll sensor (24/26).

19. The apparatus of claim 12 wherein the inertial navigation component is from the set comprising gyroscope (24), accelerometer (26), speedometer (30), odometer (30), and Doppler sensor (30).

20. The apparatus of claim 19 wherein the position change sensor (30) is comprised of a Doppler radar.

21. The apparatus of claim 15 wherein the radio navigation system (14/20) comprises a GPS based system.

22. The apparatus of claim 15 wherein the radio navigation system (14/20) is from the set comprising LORAN and GLONASS.

23. The apparatus of claim 15 wherein the navigation system for a non-airborne vehicle (60) comprises: a position change sensor (30) for sensing the speed of the vehicle (60); a set of gyros (24) for sensing the attitude and heading of the vehicle (60); a set of accelerometers (26) for sensing the forces acting on the vehicle (60); a radio navigation system (14/20) for sensing an external position reference; and a processor (12) connected to each of said sensors and radio navigation system (14/20), said processor (12) performing the processing steps of: correcting the sensed attitude of the vehicle (60) using the sensed forces acting on the vehicle (60); determining the velocity of the vehicle (60) using the sensed speed, heading and attitude of the vehicle (60), determining a first position of the vehicle (60) by integrating the determined velocity; determining the position of the antenna (22) based on the attitude of the vehicle (60) and the known location of the antenna (22) relative to the vehicle (60); correcting the external position reference based on the determined position of the antenna (22); and correcting the determined first position using the corrected external position reference.

24. The apparatus of claim 15 wherein the navigation system comprises a tractor navigation system comprising: a position change sensor (30) for sensing the speed of the tractor (60); a set of gyros (24) for sensing the attitude and heading of the tractor; a set of angular change sensors (24/26) for sensing the pitch and roll of the tractor (60); a radio navigation system (14/20) for sensing an external position reference; a processor (12) connected to each of said sensors and radio navigation system (14/20), said processor (12) performing the processing steps of: correcting the sensed attitude of the tractor (60) using the sensed pitch and roll of the tractor (60); determining the velocity of the tractor (60) using the sensed speed, heading and attitude of the tractor (60), determining a first position of the tractor (60), by integrating the determined velocity, determining the position of the antenna (22) based on the attitude of the tractor (60) and the known location of the antenna (22) relative to the tractor (60); correcting the external position reference based on the determined position of the antenna (22); and correcting the determined first position using the corrected external position reference position; the navigation system (14/20) including an output port connected to said processor (12) for providing data to a tractor guidance system.

25. The apparatus of claim 24 further comprising a user perceivable display (18) connected to said processor (12) for displaying information.

26. The apparatus of claim 24 wherein said tractor guidance system is comprised of an automatic steering system.

## Patentansprüche

1. Verfahren zum Kompensieren eines Hebelarms einer Funknavigationssystem-Antenne bei Positionsberechnungen eines Funknavigationssystems für ein Nicht-Luftfahrzeug (60) umfassend ein Bereitstellen einer Antenne (22) für ein Funknavigationssystem in einer physischen Lage relativ zu einem physischen Referenzpunkt am Fahrzeug (60) und ein Bereitstellen eines Inertialsystems zur Erfassung der Winkeländerungen des Fahrzeugs (60), **gekennzeichnet durch** folgende Schritte:
(a) Schätzen der Stellung des Fahrzeugs (60) anhand von Daten von dem Inertialsystem; und
(b) Schätzen der Position der Antenne (22) des Funknavigationssystems aufgrund der Stellung des Fahrzeugs (60) und der physischen Lage der Antenne (22) des Funknavigationssystems relativ zu dem physischen Referenzpunkt;
(c) Kompensieren des Hebelarms der Antenne in Positionsberechnungen des Funknavigationssystems aufgrund der Bestimmungen aus den Schritten (a) und (b).

2. Verfahren nach Anspruch 1, umfassend das Verwenden der Bestimmungen für die Navigation eines Nicht-Luftfahrzeuges (60).

3. Verfahren nach Anspruch 2, ferner umfassend die Navigation des Nichtluftfahrzeuges (60);
(a) ein Verwenden einer Kopplung zum Schätzen der momentanen Position des Fahrzeugs (60);
(b) ein periodisches Korrigieren der geschätzten momentanen Position anhand von Positionsinformation, wobei das Funknavigationssystem mit der Antenne (22) des Funknavigationssystems wirkverbunden ist.

4. Verfahren nach Anspruch 3, wobei das Koppeln unter Verwendung der Prinzipien der Inertialnavigation durchgeführt wird.

5. Verfahren nach Anspruch 4, wobei die Prinzipien der Inertialnavigation unter Verwendung mindestens eines Inertialnavigationsbauteils erfüllt werden.

6. Verfahren nach Anspruch 5, wobei das Inertialnavigationsbauteil ausgewählt ist aus der Gruppe umfassend einen Positionsänderungssensor (30), Winkeländerungssensor (24), Stellungssensor (24/26), Giersensor (24/26), Nicksensor und Wanksensor (24/26)..

7. Verfahren nach Anspruch 6, wobei das Inertialnavigationsbauteil ausgewählt ist aus der Gruppe umfassend Gyroskop (24), Beschleunigungsmesser (26), Drehzahlmesser (30), Odometer (30) und Doppler-Sensor (30).

8. Verfahren nach Anspruch 6, wobei der Positionsänderungssensor einen Doppler-Radar umfasst.

9. Verfahren nach Anspruch 3, wobei das Funknavigationssystem (14/20) ein auf GPS beruhendes System aufweist.

10. Verfahren nach Anspruch 3, wobei das Funknavigationssystem ausgewählt ist aus der Gruppe umfassend LORAN und GLONASS.

11. Verfahren für die Navigation eines Nicht-Luftfahrzeugs (60) nach Anspruch 3, ferner umfassend folgende Schritte: ein Bereitstellen eines Positionsänderungssensors (30); ein Erfassen der Geschwindigkeit des Fahrzeugs (60) durch den Positionsänderungssensor (30); ein Bereitstellen eines Winkeländerungssensors (24); ein Erfassen der Zielrichtung und der Stellung des Fahrzeugs (60) durch den Winkeländerungssensor (24); ein Bereitstellen eines Beschleunigungsmessers (26); ein Korrigieren der erfassten Stellung des Fahrzeugs (60) anhand der vom Beschleunigungsmesser (26), vom Positionsänderungssensor (30) und vom Winkeländerungssensor (24) erhaltenen Daten; ein Bestimmen der momentanen Position des Fahrzeugs (60) aufgrund einer bekannten früheren Position und der erfassten Geschwindigkeit, Zielrichtung und Stellung des Fahrzeugs (60); ein Bestimmen einer externen Positionsreferenz anhand der vom Funknavigationssystem (14/20) stammenden Daten und der bestimmten Position der Antenne (22) des Funknavigationssystems; und ein periodisches Korrigieren von Fehlern in der ermittelten Position des Fahrzeugs (60) anhand der bestimmten externen Positionsreferenz.

12. Verfahren zum Navigieren nach Anspruch 3, angewendet auf ein landbasiertes landwirtschaftliches Fahrzeug (60) durch ein Feld, umfassend folgende Schritte: ein Erfassen der Geschwindigkeit des Fahrzeugs (60); ein Bereitstellen eines Inertialsensorsystems; ein Erfassen der Zielrichtung und der Stellung des Fahrzeugs (60) unter Verwendung des Inertialsensorsystems (14/20); ein Bestimmen der Position des Fahrzeugs (60) aufgrund einer bekannten früheren Position und der erfassten Geschwindigkeit, Zielrichtung und Stellung des Fahrzeugs (60); ein Bereitstellen eines Funknavigationssystems (14/20); ein Bestimmen einer externen Positionsreferenz anhand von Daten aus dem Funknavigationssystem; ein Verfeinern der bestimmten externen Positionsreferenz aufgrund der bestimmten Position der Antenne (22); ein Erzeugen von wahren Positionsdaten durch periodische Fehlerkorrektur in der bestimmten Position des Fahrzeugs (60) anhand der externen Positionsreferenz; und ein Verwenden der wahren Positionsdaten zur genauen Navigation durch ein Feld.

13. Vorrichtung zum Kompensieren eines Hebelarms einer Funknavigationssystem-Antenne bei Positionsberechnungen eines Funknavigationssystems für ein Nicht-Luftfahrzeug (60) umfassend eine Antenne (22) eines Funknavigationssystems in einer physischen Lage relativ zu einem physischen Referenzpunkt am Fahrzeug (60), **gekennzeichnet durch**:
(a) ein Inertialsystembauteil zur Erzeugung von Daten, aufgrund derer die Stellung des Fahrzeugs (60) geschätzt werden kann;
(b) ein Prozessorbauteil (12) zur Erzeugung von Daten, das die physische Position der Antenne (22) des Funknavigationssystems aufgrund der Daten bezüglich der Stellung des Fahrzeugs (60) und der bekannten physischen Lage der Antenne (22) des Funknavigationssystems relativ zum physischen Referenzpunkt schätzen kann;
(c) Mittel zum Kompensieren des Hebelarms der Antenne bei Positionsberechnungen eines Funknavigationssystems aufgrund von Daten nach den Unterabschnitten (a) und (b).

14. Vorrichtung nach Anspruch 13, wobei das Inertialsystembauteil und der Prozessor (12) Teil eines Navigationssystems für das Nicht-Luftfahrzeug (60) sind.

15. Vorrichtung nach Anspruch 14, wobei das Navigationssystem für ein Nicht-Luftfahrzeug (60) folgendes umfasst:
(a) einen Sensor (30) zum Bereitstellen eines mit der geschätzten momentanen Position des Fahrzeugs (60) korrelierten Ausgangs, basierend auf Prinzipien der Kopplung;
(b) einen Empfänger (14/20) zum Empfangen, Berechnen, Bereitstellen eines Ausgangs, wie er durch die ermittelte Position der Antenne (22) kompensiert ist, korreliert mit der geschätzten Position aufgrund einer von einem Funknavigationssystem (14/20) empfangenen Information;
(c) ein Bauteil zur periodischen Verwendung des Ausgangs des Empfängers (14/20) zum Anpassen der geschätzten momentanen Position, basierend auf den Prinzipien der Kopplung.

16. Vorrichtung nach Anspruch 15, wobei die Kopplung unter Verwendung der Prinzipien der Inertialnavigation durchgeführt wird.

17. Vorrichtung nach Anspruch 16, wobei die Prinzipien der Inertialnavigation unter Verwendung wenigstens eines Inertialnavigationsbauteils erfüllt werden.

18. Vorrichtung nach Anspruch 17, wobei das Inertialnavigationsbauteil ausgewählt ist aus der Gruppe umfassend Positionsänderungssensor (30), Winkeländerungssensor (24), Stellungssensor (24/26), Giersensor (24/26), Nicksensor (24/26) und Wanksensor (24/26).

19. Vorrichtung nach Anspruch 12, wobei das Inertialnavigationsbauteil ausgewählt ist aus der Gruppe umfassend Gyroskop (24), Beschleunigungsmesser (26), Drehzahlmesser (30), Odometer (30) und Doppler-Sensor (30).

20. Vorrichtung nach Anspruch 19, wobei der Positionsänderungssensor (30) einen Doppler-Radar umfasst.

21. Vorrichtung nach Anspruch 15, wobei das Funknavigationssystem (14/20) ein auf GPS beruhendes System aufweist.

22. Vorrichtung nach Anspruch 15, wobei das Funknavigationssystem (14/20) ausgewählt ist aus der Gruppe umfassend LORAN und GLONASS.

23. Vorrichtung nach Anspruch 15, wobei das Navigationssystem für ein Nicht-Luftfahrzeug (60) folgendes umfasst: einen Positionsänderungssensor (30) zum Erfassen der Geschwindigkeit des Fahrzeugs (60); einen Satz Gyros (24) zum Erfassen der Stellung und der Zielrichtung des Fahrzeugs (60); einen Satz Geschwingkeitsmesser (26) zum Erfassen der auf das Fahrzeug (60) wirkenden Kräfte; ein Funknavigationssystem (14/20) zum Erfassen einer externen Positionsreferenz; und einen mit jedem dieser Sensoren und mit dem Funknavigationssystem (14/20) verbundenen Prozessor (12), wobei der Prozessor (12) die folgenden Verarbeitungsschritte vornimmt: Korrigieren der erfassten Stellung des Fahrzeugs (60) unter Verwendung der erfassten, auf das Fahrzeug (60) wirkenden Kräfte; Ermitteln der Geschwindigkeit des Fahrzeugs (60) unter Verwendung der erfassten Geschwindigkeit, Zielrichtung und Stellung des Fahrzeugs (60), Bestimmen einer ersten Position des Fahrzeugs (60) durch Integrieren der ermittelten Geschwindigkeit; Bestimmen der Position der Antenne (22) aufgrund der Stellung des Fahrzeugs (60) und der bekannten Lage der Antenne (22) relativ zum Fahrzeug (60); Korrigieren der externen Positionsreferenz aufgrund der ermittelten Position der Antenne (22); und Korrigieren der bestimmten ersten Position unter Verwendung der korrigierten externen Positionsreferenz.

24. Vorrichtung nach Anspruch 15, wobei das Navigationssystem ein Traktornavigationssystem umfasst, welches umfasst: einen Positionsänderungssensor (30) zum Erfassen der Geschwindigkeit des Traktors (60), einen Satz Gyros (24) zum Erfassen der Stellung und der Zielrichtung des Traktors; einen Satz von Winkeländerungssensoren (24/26) zum Erfassen der Neigung und des Wankens des Traktors (60); ein Funknavigationssystem (14/20) zum Erfassen einer externen Positionsreferenz; einen mit jedem dieser Sensoren und mit dem Funknavigationssystem (14/20) verbundenen Prozessor (12), wobei der Prozessor (12) die folgenden Verarbeitungsschritte vornimmt: Korrigieren der erfassten Stellung des Traktors (60) unter Verwendung der erfassten Neigung und des Wankens des Traktors (60); Ermitteln der Geschwindigkeit des Traktors (60) unter Verwendung der erfassten Geschwindigkeit, Zielrichtung und Fahrbewegungen des Traktors (60), Bestimmen einer ersten Position des Traktors (60) durch Integrieren der ermittelten Geschwindigkeit; Bestimmen der Position der Antenne (22) aufgrund der Stellung des Traktors (60) und der bekannten Lage der Antenne (22) relativ zum Traktor (60); Korrigieren der externen Positionsreferenz aufgrund der ermittelten Position der Antenne (22); und Korrigieren der bestimmten ersten Position unter Verwendung der korrigierten Position der externen Positionsreferenz, wobei das Navigationssystem (14/20) einen mit dem Prozessor (12) verbundenen Ausgang umfasst, über den Daten einem Traktorleitsystem zugeführt werden.

25. Vorrichtung nach Anspruch 24, ferner umfassend eine mit dem Prozessor (12) verbundene, vom Nutzer erkennbare Anzeige (18) zum Anzeigen von Informationen.

26. Vorrichtung nach Anspruch 24, wobei das Traktorleitsystem ein automatisches Lenksystem umfasst.

## Revendications

1. Procédé de compensation pour un bras de levier d'une antenne d'un système de radionavigation dans des calculs de position d'un système de radionavigation pour un véhicule non aéroporté (60) comprenant les étapes consistant à fournir une antenne de système de radionavigation (22) ayant un emplacement physique par rapport à un point de référence physique sur le véhicule (60), et fournir un système inertiel destiné à capter les changements angulaires du véhicule (60), **caractérisé en ce qu'**il comprend les étapes consistant à :
(a) estimer l'orientation du véhicule (60) en utilisant des données provenant du système inertiel ; et
(b) estimer la position de l'antenne de système de radionavigation (22) sur la base de l'orientation du véhicule (60) et de l'emplacement physique de l'antenne de système de radionavigation (22) par rapport au point de référence physique ;
(c) compenser un bras de levier d'antenne dans des calculs de position de système de radionavigation sur la base des déterminations des étapes (a) et (b).

2. Procédé selon la revendication 1, comprenant l'étape consistant à utiliser les déterminations pour la navigation d'un véhicule non aéroporté (60).

3. Procédé selon la revendication 2, comprenant en outre l'étape consistant à calculer le parcours du véhicule non aéroporté (60) grâce aux étapes consistant à :
(a) utiliser la navigation à l'estime pour estimer une position actuelle du véhicule (60) ;
(b) corriger périodiquement la position actuellement estimée en utilisant des informations de position provenant d'un système de radionavigation (14/20) connecté de façon opérationnelle à l'antenne de système de radionavigation (22).

4. Procédé selon la revendication 3, dans lequel la navigation à l'estime est mise en oeuvre en utilisant des principes de navigation par inertie.

5. Procédé selon la revendication 4, dans lequel les principes de navigation par inertie sont mis en oeuvre en utilisant au moins un composant de navigation par inertie.

6. Procédé selon la revendication 5, dans lequel le composant de navigation par inertie est choisi dans le groupe constitué d'un capteur de changement de position (30), d'un capteur de changement angulaire (24), d'un capteur d'orientation (24/26), d'un capteur de lacet (24/26), d'un capteur d'inclinaison (24/26), et d'un capteur de roulis (24/26).

7. Procédé selon la revendication 6, dans lequel le composant de navigation par inertie est choisi dans le groupe constitué d'un gyroscope (24), d'un accéléromètre (26), d'un compteur de vitesse (30), d'un compteur kilométrique (30), et d'un capteur Doppler (30).

8. Procédé selon la revendication 6, dans lequel ledit capteur de changement de position comprend un radar Doppler.

9. Procédé selon la revendication 3, dans lequel le système de radionavigation (14/20) comprend un système GPS.

10. Procédé selon la revendication 3, dans lequel le système de radionavigation est choisi dans le groupe constitué d'un système LORAN (radionavigation aérienne à longue portée) et d'un système GLONASS.

11. Procédé de navigation d'un véhicule non aéroporté (60) selon la revendication 3, comprenant en outre les étapes consistant à : fournir un capteur de changement de position (30) ; capter la vitesse du véhicule (60) en utilisant le capteur de changement de position (30) ; fournir un capteur de changement angulaire (24) ; capter le cap et l'orientation du véhicule (60) en utilisant le capteur de changement angulaire (24) ; fournir un accéléromètre (26) ; corriger l'orientation détectée du véhicule (60) ; utiliser les données provenant de l'accéléromètre (26), du capteur de changement de position (30) et du capteur de changement angulaire (24) ; déterminer la position en cours du véhicule (60) sur la base d'une position précédente connue et de la vitesse, du cap, et de l'orientation captés du véhicule (60) ; déterminer une position de référence externe en utilisant des données provenant du système de radionavigation (14/20) et de la position déterminée de l'antenne du système de radionavigation (22) ; et corriger périodiquement les erreurs dans la position déterminée du véhicule (60) en utilisant la position de référence externe déterminée.

12. Procédé de calcul de parcours selon la revendication 3 appliqué à un véhicule agricole terrestre (60) à travers un champ comprenant les étapes consistant à : capter la vitesse du véhicule (60) ; fournir un système de capteur inertiel ; capter le cap et l'orientation du véhicule (60) en utilisant le système des capteurs inertiels (14/20) ; déterminer la position du véhicule (60) sur la base d'une position précédente connue et de la vitesse, du cap et de l'orientation détectés du véhicule (60) ; fournir un système de radionavigation (14/20) ; déterminer une position de référence externe en utilisant des données provenant du système de radionavigation ; affiner la position de référence externe sur la base de la position déterminée de l'antenne (22) ; produire des données de position réelle en corrigeant périodiquement une erreur dans la position déterminée du véhicule (60) en utilisant la position de référence externe ; et utiliser les données de position réelle pour calculer précisément le parcours à travers un champ.

13. Appareil de compensation pour un bras de levier d'antenne de système de radionavigation dans des calculs de position de système de radionavigation pour un véhicule non aéroporté (60) comprenant une antenne de système de radionavigation (22) ayant un emplacement physique par rapport à un point de référence physique sur le véhicule (60), **caractérisé en ce qu'**il comprend :
(a) un composant de système inertiel adapté pour produire des données à partir desquelles on peut estimer l'orientation du véhicule (60) ;
(b) un composant formant un processeur (12) adapté pour produire des données à partir desquelles on peut estimer la position physique de l'antenne de système de radionavigation (22) sur la base des données concernant l'orientation du véhicule (60) et l'emplacement physique connu de l'antenne de système de radionavigation (22) par rapport au point de référence physique ;
(c) un moyen destiné à compenser un bras de levier d'antenne dans des calculs de position de système de radionavigation sur la base des données des sous paragraphes (a) et (b).

14. Appareil selon la revendication 13, dans lequel le composant de système inertiel et le processeur (12) font partie d'un système de navigation pour le véhicule non aéroporté (60).

15. Appareil selon la revendication 14, dans lequel le système de navigation pour un véhicule non aéroporté (60) comprend :
(a) un capteur (30) adapté pour fournir une sortie corrélée avec une position en cours estimée du véhicule (60) sur la base des principes de navigation à l'estime ;
(b) un récepteur (14/20) adapté pour recevoir, calculer et fournir une sortie, tel que compensé par la position déterminée de l'antenne (22), corrélée avec une position estimée sur la base de l'information reçue à partir d'un système de radionavigation (14/20) ;
(c) un composant adapté pour utiliser périodiquement la sortie du récepteur (14/20) afin d'ajuster la position encore estimée sur la base des principes de navigation à estime.

16. Appareil selon la revendication 15, dans lequel la navigation à l'estime est mise en oeuvre en utilisant des principes de navigation par inertie.

17. Appareil selon la revendication 16, dans lequel les principes de navigation par inertie sont mis en oeuvre en utilisant au moins un composant de navigation par inertie.

18. Appareil selon la revendication 17, dans lequel le composant de navigation par inertie est choisi dans le groupe constitué d'un capteur de changement de position (30), d'un capteur de changement angulaire (24), d'un capteur d'orientation (24, 26), d'un capteur de lacet (24/26), d'un capteur d'inclinaison (24/26) et d'un capteur de roulis (24/26).

19. Appareil selon la revendication 12, dans lequel le composant de navigation par inertie est choisi dans le groupe constitué d'un gyroscope (24), d'un accéléromètre (26), d'un compteur de vitesse (30), d'un compteur kilométrique (30), et d'un capteur Doppler (30).

20. Appareil selon la revendication 19, dans lequel le capteur de changement de position (30) comprend un radar Doppler.

21. Appareil selon la revendication 15, dans lequel le système de radionavigation (14/20) comprend un système GPS.

22. Appareil selon la revendication 15, dans lequel le système de radionavigation (14/20) est choisi dans le groupe constitué d'un système LORAN et d'un système GLONASS.

23. Appareil selon la revendication 15, dans lequel le système de navigation pour un véhicule non aéroporté (60) comprend : un capteur de changement de position (30) destiné à capter la vitesse du véhicule (60) ; un groupe de gyroscopes (24) destinés à capter l'orientation et le cap du véhicule (60) ; un groupe d'accéléromètres (26) destinés à capter les forces agissant sur le véhicule (60) ; un système de radionavigation (14/20) destiné à capter une position de référence externe; et un processeur (12) connecté à chacun desdits capteurs et systèmes de radionavigation (14/20), ledit processeur (12) accomplissant les étapes de traitement consistant à : corriger l'orientation détectée du véhicule (60) en utilisant les forces détectées agissant sur le véhicule (60) ; déterminer la vitesse du véhicule (60) en utilisant la vitesse, le cap et l'orientation détectés du véhicule (60), déterminer une première position du véhicule (60) en intégrant la vitesse déterminée ; déterminer la position de l'antenne (22) sur la base de l'orientation du véhicule (60) et de l'emplacement connu de l'antenne (22) par rapport au véhicule (60) ; corriger la position de référence externe sur la base de la position déterminée de l'antenne (22) ; et corriger la première position déterminée en utilisant la position de référence externe corrigée.

24. Appareil selon la revendication 15, dans lequel le système de navigation comprend un système de navigation pour tracteur comprenant : un capteur de changement de position (30) destiné à capter la vitesse du tracteur (60) ; un groupe de gyroscopes (24) destiné à capter l'orientation et le cap du tracteur, un groupe de capteurs de changement angulaire (24/26) destinés à capter le tangage et le roulis du tracteur (60) ; un système de radionavigation (14/20) destiné à capter une position de référence externe ; un processeur (12) connecté à chacun desdits capteurs et système de radionavigation (14/20), ledit processeur (12) accomplissant les étapes de traitement consistant à : corriger l'orientation détectée du tracteur (60) en utilisant le tangage et le roulis détectés du tracteur (60) ; déterminer la vitesse du tracteur (60) en utilisant la vitesse, le cap et l'orientation détectés du tracteur (60), déterminer une première position du tracteur (60) en intégrant la vitesse déterminée, déterminer la position de l'antenne (22) sur la base de l'orientation du tracteur (60) et de l'emplacement connu de l'antenne (22) par rapport au tracteur (60) ; corriger la position de référence externe sur la base de la position déterminée de l'antenne (22) ; et corriger la première position déterminée en utilisant la position de référence externe corngée ; le système de navigation (14/20) comprenant un point d'accès et de sortie connecté audit processeur (12) afin de fournir des données à un système de guidage pour tracteur.

25. Appareil selon la revendication 24, comprenant en outre un dispositif d'affichage pouvant être perçu par un utilisateur (18), connecté audit processeur (12) afin d'afficher des informations.

26. Appareil selon la revendication 24, dans lequel ledit système de guidage pour tracteur est constitué d'un système de pilotage automatique.
